# EUROPEAN PATENT APPLICATION

(11) **EP 4 287 780 A1**
(43) Date of publication of application: **06.12.2023**
(21) Application number: 23176541.3
(22) Date of filing: 31.05.2023
(51) Int. Cl.: H05B 45/50, H05B 45/30, H05B 45/345

(54) **DRIVE CIRCUIT AND SMOKE DETECTION DEVICE COMPRISING THE DRIVE CIRCUIT**

(30) Priority: 31.05.2022 CN 202210609080
(71) Applicant: Gulf Security Technology Company Limited, Qinhuangdao Hebei 066004 (CN)
(72) Inventor: LU, Haiyong, Qinhuangdao, Hebei 066004 (CN); YANG, Zhanlin, Qinhuangdao, Hebei 066004 (CN)
(74) Representative: Dehns

(57) **Abstract**

The present application relates to power supply technology, and in particular to a drive circuit for driving a light-emitting diode and a smoke detection device comprising the drive circuit. The drive circuit according to the present application comprises: a constant-current drive module; a light-emitting diode, a positive electrode of which is coupled with a DC power supply, the DC power supply having an output voltage greater than a maximum allowable operating voltage of the constant-current drive module; and a transistor comprising a control terminal, a first terminal coupled with a negative electrode of the light-emitting diode, and a second terminal coupled with the constant-current drive module, wherein a voltage signal having a set amplitude is applied onto the control terminal such that the transistor operates in a cut-off region when a voltage at the second terminal is close to the set amplitude.

## Description

### Technical field

The present application relates to power supply technology, and in particular to a drive circuit for driving a light-emitting diode and a smoke detection device comprising the drive circuit.

### Background

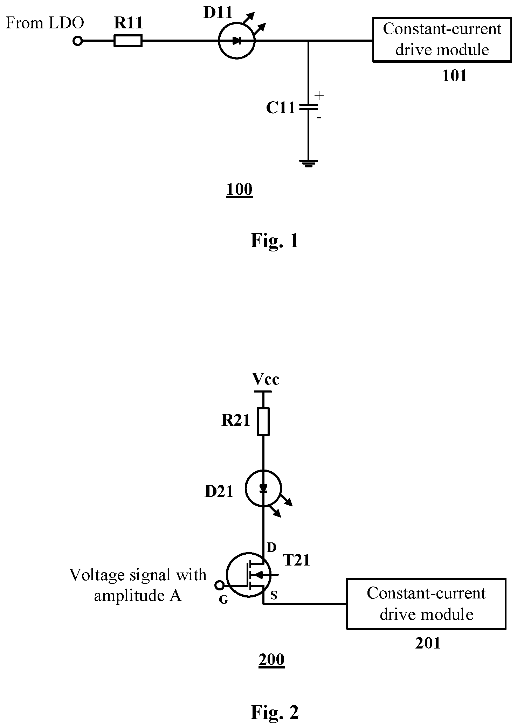

In order to reduce false alarms from smoke detectors, dual-band detection technology is increasingly being used. In a dual-band detector, an infrared light-emitting diode and blue light-emitting diode are typically used as light-emitting elements. In existing smoke detectors, a dedicated integrated circuit chip with an integrated constant-current drive module is usually used. FIG. 1 is a circuit schematic diagram of a typical drive circuit 100. As shown in FIG. 1, a positive electrode of a light-emitting diode D11 is connected with an output terminal of a low dropout regulator (LDO) via a resistor R11, and a negative electrode is connected with a constant-current drive module 101. In FIG. 1, the output voltage of the LDO or the system voltage cannot be too high due to the limitation of a maximum allowable operating voltage (usually 3V) of the constant-current drive module 101, which is feasible for the infrared light-emitting diode. On the other hand, the blue light-emitting diode requires a higher driving voltage (e.g., 5V) compared to the infrared light-emitting diode. In order to solve the conflict between the higher driving voltage and lower maximum allowable operating voltage, the industry is developing dedicated integrated circuit chips with higher maximum allowable operating voltage. However, this solution will lead to an increase in power consumption, and it also needs to introduce an expensive energy storage capacitor (an electrolytic capacitor C11 connected between the positive electrode of the light-emitting diode D11 and ground, as shown in FIG. 1) in the drive circuit.

### Summary

According to an aspect of the present application, there is provided a drive circuit comprising:
a constant-current drive module;
a light-emitting diode, a positive electrode of which is coupled with a DC power supply, the DC power supply having an output voltage greater than a maximum allowable operating voltage of the constant-current drive module; and
a transistor comprising a control terminal, a first terminal coupled with a negative electrode of the light-emitting diode, and a second terminal coupled with the constant-current drive module,
wherein a voltage signal having a set amplitude is applied onto the control terminal such that the transistor operates in a cut-off region when a voltage at the second terminal is close to the set amplitude.

Optionally, in the above drive circuit, the transistor is an N-type metal oxide semiconductor field effect (MOSFET) transistor comprising a gate as the control terminal, a drain as the first terminal and a source as the second terminal.

In the above drive circuit, the transistor is an NPN-type triode comprising a base as the control terminal, a collector as the first terminal and an emitter as the second terminal.

In the above drive circuit, in addition to one or more of the above-mentioned features, the set amplitude is equal to the maximum allowable operating voltage.

In the above drive circuit, the constant-current drive module is implemented in a form of an integrated circuit chip.

In the above drive circuit, the light-emitting diode is a blue light-emitting diode or an infrared light-emitting diode.

According to another aspect of the present application, there is provided a smoke detection device comprising:
a DC power supply;
one or more drive circuits, each of which comprising:
   a constant-current drive module;
   a light-emitting diode, a positive electrode of which is coupled with the DC power supply, the DC power supply having an output voltage greater than a maximum allowable operating voltage of the constant-current drive module; and
   a transistor comprising a control terminal, a first terminal coupled with a negative electrode of the light-emitting diode, and a second terminal coupled with the constant-current drive module,
   wherein a voltage signal having a set amplitude is applied onto the control terminal such that the transistor operates in a cut-off region when a voltage at the second terminal is close to the set amplitude,
   a photodetector configured to receive light emitted by the light-emitting diode;
   a microcontroller configured to determine whether smoke is present based on intensity of the light emitted by the light-emitting diode and intensity of the light received by the photodetector.

In the above smoke detection device, further comprising a voltage signal source coupled with the control terminal configured to apply the voltage signal having the set amplitude onto the control terminal.

In the above smoke detection device, the voltage signal source is a low dropout regulator.

### Description of the drawings

The above and/or other aspects and advantages of the present application will be clearer and more easily understood from the following description of various aspects in conjunction with the accompanying drawings, in which the same or similar elements are denoted by the same reference numerals. The accompanying drawings include:
FIG. 1 is a circuit schematic diagram of a typical drive circuit.
FIG. 2 is a circuit schematic diagram of a drive circuit in accordance with some embodiments of the present application.
FIG. 3 is a circuit schematic diagram of a drive circuit in accordance with some other embodiments of the present application.
FIG. 4 is a block diagram of a smoke detection device in accordance with some other embodiments of the present application.

### Detailed description

The present application is described more fully below with reference to the accompanying drawings, in which illustrative embodiments of the application are illustrated. However, the present application may be implemented in different forms and should not be construed as limited to the embodiments presented herein. The presented embodiments are intended to make the disclosure herein comprehensive and complete, so as to more comprehensively convey the protection scope of the application to those skilled in the art.

In this specification, terms such as "comprising" and "including" mean that in addition to units and steps that are directly and clearly stated in the specification and claims, the technical solution of the application does not exclude the presence of other units and steps that are not directly and clearly stated in the specification and claims.

Unless otherwise specified, terms such as "first" and "second" do not indicate the order of the units in terms of time, space, size, etc., but are merely used to distinguish the units.

In this specification, "coupling" should be understood as including the direct transmission of electrical energy or signals between two units, or the indirect transmission of the electrical energy or signals through one or more third units.

According to some embodiments of the present application, a transistor is connected between a light-emitting diode and a constant-current drive module, and the switching characteristics of the transistor are used to clamp an input voltage of the constant-current drive module below its maximum allowable operating voltage. Specifically, by applying a voltage signal having a set amplitude onto a control terminal (gate or base) of the transistor, the transistor operates in a cut-off region when the voltage at the terminal of the transistor connected to the constant-current drive module (i.e., the input voltage of the constant-current drive module) is close to the set amplitude, thereby ensuring that the input voltage of the constant-current drive module does not exceed the maximum allowable operating voltage (for example, when the set amplitude is set close to the maximum allowable operating voltage), even when driving the light-emitting diode at a higher voltage.

Specific embodiments of the present application are further described below with the aid of the accompanying drawings. It is noted that some non-essential features or circuit elements are not shown in the accompanying drawings in order to more clearly describe what is relevant to the present application. However, for those skilled in the art, such omission does not create difficulties in the implementation of the technical solutions described in the specification of the present application.

FIG. 2 is a circuit schematic diagram of a drive circuit in accordance with some embodiments of the present application.

A drive circuit 200 shown in FIG. 2 includes a constant-current drive module 201, a resistor R21, a light-emitting diode D21, and a transistor T21. Optionally, but not necessarily, the drive circuit 200 also includes a voltage signal source 202.

Referring to FIG. 2, in the drive circuit 200 shown in FIG. 2, the light-emitting diode D21 may be an infrared light-emitting diode or a blue light-emitting diode, a positive electrode of which is connected to a DC power supply Vcc via the resistor R21. This DC power supply Vcc may have a high output voltage, such as 15V-30V.

Continuing with FIG. 2, in this embodiment, the transistor T21 is an N-type metal oxide semiconductor field effect (MOSFET) transistor comprising a gate G as a control terminal, a drain D as a first terminal, and a source S as a second terminal. As shown in FIG. 2, the drain D of the transistor T21 is connected with a negative electrode of the diode D21, the source S is connected with the constant-current drive module 201, and the gate G is connected with the voltage signal source 202. Exemplarily, the voltage signal source 202 may be implemented using a low dropout regulator (LDO). It is noted that the voltage signal source 202 may be an internal unit of the drive circuit 200 or an external unit of the drive circuit 200.

In the embodiment shown in FIG. 2, a voltage signal having a set amplitude A is applied onto the gate of the transistor T21 by the voltage signal source 202. To ensure that an input voltage of the constant-current drive module 201 does not exceed a maximum allowable operating voltage Vₘₐₓ (e.g., 3 V), the set amplitude A may be made no greater than the maximum allowable operating voltage Vₘₐₓ. In one example, the amplitude A is set equal to the maximum allowable operating voltage Vₘₐₓ.

The operating principle of the drive circuit 200 shown in FIG. 2 is described below.

When the drive circuit 200 is in an operating state, because the voltage signal having the set amplitude A is applied onto the gate of the transistor T21, the gate-source voltage V_{GS} of the transistor T21 is greater than a turn-on voltage, and the transistor T21 is in an on-state. Therefore, a current loop is formed between the DC power supply Vcc, the light-emitting diode D21, the transistor T21, the constant-current drive module 201, and ground. The light-emitting diode D21 is in a light-emitting state.

In the drive circuit according to this embodiment, even though an output voltage of the DC power supply Vcc is much higher than the maximum allowable operating voltage Vₘₐₓ, it is still possible to ensure that the input voltage V_{G} of the constant-current drive module 201 does not exceed the maximum allowable operating voltage (e.g., 3V) when the constant-current drive module 201 is in an enable state because most of the voltage drop is shared by the transistor T21.

When the voltage at the second terminal of the transistor or at the input of the constant-current drive module is close to the set amplitude, the transistor T21 will be in a cut-off or off state because the gate-source voltage V_{GS} of the transistor T21 is less than the turn-on voltage. In other words, the input voltage of the constant-current drive module 201 cannot exceed the maximum allowable operating voltage due to the clamping effect of the gate voltage.

It should be noted that although the transistor T21 shown in FIG. 2 is implemented as an N-type MOSFET transistor, it may also be implemented as a P-type MOSFET transistor.

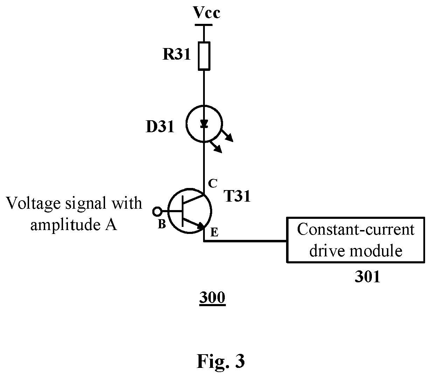

FIG. 3 is a circuit schematic diagram of a drive circuit in accordance with some other embodiments of the present application.

A drive circuit 300 shown in FIG. 3 includes a constant-current drive module 301, a resistor R31, a light-emitting diode D31, and a transistor T31.

Referring to FIG. 3, in the drive circuit 300 shown in FIG. 3, the light-emitting diode D31 may be an infrared light-emitting diode or a blue light-emitting diode, a positive electrode of which is connected to a DC power supply Vcc via the resistor R31. This DC power supply Vcc may have a high output voltage, such as 15V-30V.

Continuing with FIG. 3, in this embodiment, the transistor T31 is an NPN-type triode comprising a base B as a control terminal, a collector C as a first terminal and an emitter E as a second terminal. As shown in FIG. 3, the collector C of the transistor T31 is connected with a negative electrode of the diode D31, the emitter E is connected with the constant-current drive module 301, and the base B is connected with the a voltage signal source 302. Exemplarily, the voltage signal source 302 may be implemented using a low dropout regulator (LDO). It is noted that the voltage signal source 302 may be an internal unit of the drive circuit 300 or an external unit of the drive circuit 300.

In the embodiment shown in FIG. 3, a voltage signal having a set amplitude A is applied onto the base of the transistor T31 by the voltage signal source 302. To ensure that an input voltage of the constant-current drive module 301 does not exceed a maximum allowable operating voltage Vₘₐₓ (e.g., 3 V), the set amplitude A may be made no greater than the maximum allowable operating voltage Vₘₐₓ. In one example, the amplitude A is set equal to the maximum allowable operating voltage Vₘₐₓ.

The operating principle of the drive circuit 300 shown in FIG. 3 is described below.

When the drive circuit 300 is in an operating state, because the voltage signal having the set amplitude is applied onto the base of the transistor T31, the base-emitter voltage V_{be} of the transistor T31 is greater than a turn-on voltage, and the transistor T31 is in an on-state. Therefore, a current loop is formed between the DC power supply Vcc, the light-emitting diode D31, the transistor T31, the constant-current drive module 301, and ground. The light-emitting diode D31 is in a light-emitting state.

In the drive circuit according to this embodiment, even though an output voltage of the DC power supply Vcc is much higher than the maximum allowable operating voltage, it is still possible to ensure that the input voltage of the constant-current drive module 301 does not exceed the maximum allowable operating voltage Vₘₐₓ (e.g., 3V) when the constant-current drive module 301 is in an enable state because most of the voltage drop is shared by the transistor T31.

When the voltage at the second terminal of the transistor or at the input of the constant-current drive module is close to the set amplitude, the transistor T31 will be in a cut-off or off state because the base-emitter voltage V_{be} of the transistor T31 is less than the turn-on voltage. In other words, the input voltage of the constant-current drive module 301 cannot exceed the maximum allowable operating voltage Vₘₐₓ due to the clamping effect of the base voltage.

It should be noted that although the transistor T31 shown in FIG. 3 is implemented as an NPN-type triode, it may also be implemented as a PNP-type triode.

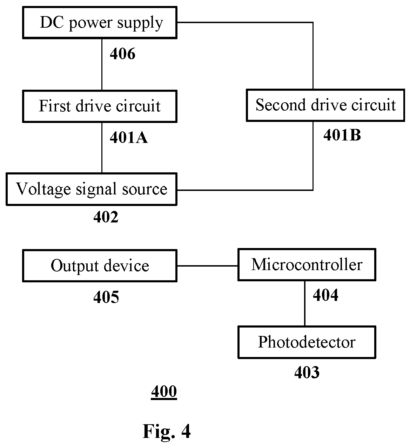

FIG. 4 is a block diagram of a smoke detection device in accordance with some other embodiments of the present application.

A smoke detection device 400 shown in FIG. 4 includes a first drive circuit 401A, a second drive circuit 401 B, a voltage signal source 402, a photodetector 403, a microcontroller 404, an output device 405, and a DC power supply 406.

In the smoke detection device shown in FIG. 4, the first drive circuit 401A and the second drive circuit 401B may employ drive circuits having various features described above with the aid of the embodiments described in FIGS. 2 and 3. Exemplarily, the light-emitting diodes in the first drive circuit 401A and the second drive circuit 401B are an infrared light-emitting diode and a blue light-emitting diode, respectively, whose positive electrodes are coupled with the DC power supply 406.

The voltage signal source 402 is coupled with the control terminals of the transistors in the first drive circuit 401A and the second drive circuit 401B to provide the aforementioned voltage signal having a set amplitude. Exemplarily, the voltage signal source 402 may be implemented using a low dropout regulator (LDO). It is noted that while the voltage signal source 402 is implemented as a stand-alone unit in the embodiment shown in FIG. 4, it may also be integrated into other units in the smoke detection device shown in FIG. 4, or its function may be implemented by other units. For example, the voltage signal source 402 may be integrated within the DC power supply 406, or integrated with the constant-current drive module of the drive circuit, or the voltage signal may also be provided by the microcontroller.

The photodetector 403 may for example be a photosensitive element configured to receive light emitted by the light-emitting diodes in the drive circuits 401A and 401B. The microcontroller 404 is coupled with the photodetector 403 and is configured to determine whether smoke is present based on intensity of the light emitted by the light-emitting diode and intensity of the light received by the photodetector 403, and to instruct the output device 405 (e.g., an audio device) to send an alarm indication signal when the presence of smoke is determined. Exemplarily, the microcontroller 404 may compare the intensity of the light emitted by the light-emitting diode to the intensity of the light received by the photodetector 403 and determine the presence of smoke in the light propagation path if the difference between the two is greater than a set threshold.

In some embodiments of the present application, since a low-voltage chip can still be used as a constant-current drive module for the blue light-emitting diode and there is no need to introduce an energy storage capacitor, manufacturing costs and power consumption can be reduced.

Those skilled in the art will appreciate that the various illustrative logical blocks, modules, circuits, and algorithm steps described herein may be implemented as electronic hardware, computer software, or combinations of both.

To demonstrate this interchangeability between hardware and software, various illustrative components, blocks, modules, circuits, and steps have been described above generally in terms of their functionality. Whether such functionality is implemented in hardware or software depends on the particular application and design constraints imposed on the overall system. Those skilled in the art may implement the described functionality in changing ways for the particular application. However, such implementation decisions should not be interpreted as causing a departure from the scope of the present application.

Although only a few of the specific embodiments of the present application have been described, those skilled in the art will recognize that the present application may be embodied in many other forms without departing from the spirit and scope thereof. Accordingly, the examples and implementations shown are to be regarded as illustrative and not restrictive, and various modifications and substitutions may be covered by the application without departing from the spirit and scope of the application as defined by the appended claims.

The embodiments and examples presented herein are provided to best illustrate embodiments in accordance with the present technology and its particular application, and to thereby enable those skilled in the art to implement and use the present application. However, those skilled in the art will appreciate that the above description and examples are provided for convenience of illustration and example only. The presented description is not intended to cover every aspect of the application or to limit the application to the precise form disclosed.

## Claims

1. A drive circuit comprising:
a constant-current drive module;
a light-emitting diode, a positive electrode of which is coupled with a DC power supply, the DC power supply having an output voltage greater than a maximum allowable operating voltage of the constant-current drive module; and
a transistor comprising a control terminal, a first terminal coupled with a negative electrode of the light-emitting diode, and a second terminal coupled with the constant-current drive module,
wherein a voltage signal having a set amplitude is applied onto the control terminal such that the transistor operates in a cut-off region when a voltage at the second terminal is close to the set amplitude.

2. The drive circuit of claim 1, wherein the transistor is an N-type metal oxide semiconductor field effect (MOSFET) transistor comprising a gate as the control terminal, a drain as the first terminal and a source as the second terminal.

3. The drive circuit of claim 1, wherein the transistor is an NPN-type triode comprising a base as the control terminal, a collector as the first terminal and an emitter as the second terminal.

4. The drive circuit of claim 2 or 3, wherein the set amplitude is equal to the maximum allowable operating voltage.

5. The drive circuit of claim 4, wherein the constant-current drive module is implemented in a form of an integrated circuit chip.

6. The drive circuit of claim 4, wherein the light-emitting diode is a blue light-emitting diode or an infrared light-emitting diode.

7. A smoke detection device comprising:
a DC power supply;
one or more drive circuits, each of which comprising:
a constant-current drive module;
a light-emitting diode, a positive electrode of which is coupled with the DC power supply, the DC power supply having an output voltage greater than a maximum allowable operating voltage of the constant-current drive module; and
a transistor comprising a control terminal, a first terminal coupled with a negative electrode of the light-emitting diode, and a second terminal coupled with the constant-current drive module,
wherein a voltage signal having a set amplitude is applied onto the control terminal such that the transistor operates in a cut-off region when a voltage at the second terminal is close to the set amplitude,
a photodetector configured to receive light emitted by the light-emitting diode;
a microcontroller configured to determine whether smoke is present based on intensity of the light emitted by the light-emitting diode and intensity of the light received by the photodetector.

8. The smoke detection device of claim 7, wherein the transistor is an N-type metal oxide semiconductor field effect (MOSFET) transistor comprising a gate as the control terminal, a drain as the first terminal and a source as the second terminal.

9. The smoke detection device of claim 7, wherein the transistor is an NPN-type triode comprising a base as the control terminal, a collector as the first terminal and an emitter as the second terminal.

10. The smoke detection device of claim 8 or 9, wherein further comprising a voltage signal source coupled with the control terminal configured to apply the voltage signal having the set amplitude onto the control terminal.

11. The smoke detection device of claim 10, wherein the voltage signal source is a low dropout regulator.

12. The smoke detection device of claim 8 or 9, wherein the set amplitude is equal to the maximum allowable operating voltage.

13. The smoke detection device of claim 12, wherein the constant-current drive module is implemented in a form of an integrated circuit chip.

14. The smoke detection device of claim 12, wherein the light-emitting diode is a blue light-emitting diode or an infrared light-emitting diode.
